(19) Europäisches Patentamt
European Patent Office
Office européen des brevets

(11) **EP 1 192 418 B1**

(12) **EUROPÄISCHE PATENTSCHRIFT**

(45) Veröffentlichungstag und Bekanntmachung des Hinweises auf die Patenterteilung:
**02.04.2008 Patentblatt 2008/14**

(21) Anmeldenummer: **00951206.2**

(22) Anmeldetag: **03.06.2000**

(51) Int Cl.:
***G01C 21/36*** *(2006.01)*

(86) Internationale Anmeldenummer:
**PCT/DE2000/001814**

(87) Internationale Veröffentlichungsnummer:
**WO 2000/077474 (21.12.2000 Gazette 2000/51)**

(54) **NAVIGATIONSGERÄT**

NAVIGATION DEVICE

APPAREIL DE NAVIGATION

(84) Benannte Vertragsstaaten:
**DE FR GB IT**

(30) Priorität: **10.06.1999 DE 19926367**

(43) Veröffentlichungstag der Anmeldung:
**03.04.2002 Patentblatt 2002/14**

(73) Patentinhaber: **ROBERT BOSCH GMBH**
**70442 Stuttgart (DE)**

(72) Erfinder: **DUCKECK, Ralf**
**D-31137 Hildesheim (DE)**

(56) Entgegenhaltungen:
- **PATENT ABSTRACTS OF JAPAN vol. 1995, no. 10, 30. November 1995 (1995-11-30) -& JP 07 182597 A (NISSAN MOTOR CO LTD), 21. Juli 1995 (1995-07-21)**
- **PATENT ABSTRACTS OF JAPAN vol. 1995, no. 01, 28. Februar 1995 (1995-02-28) -& JP 06 300575 A (MATSUSHITA ELECTRIC IND CO LTD), 28. Oktober 1994 (1994-10-28)**
- **PATENT ABSTRACTS OF JAPAN vol. 1995, no. 07, 31. August 1995 (1995-08-31) & JP 07 103777 A (MATSUSHITA ELECTRIC IND CO LTD), 18. April 1995 (1995-04-18)**

**Beschreibung**

Stand der Technik

Die Erfindung geht von einem Navigationsgerät und einem Verfahren zur Steuerung des Maßstabs eines auf einer Anzeigeeinheit eines Navigationsgeräts dargestellten Kartenausschnitts gemäß den Oberbegriffen der unabhängigen Patentansprüche aus.

Es sind Navigationsgeräte zur vorzugsweisen Verwendung in Kraftfahrzeugen bekannt, die über eine Anzeigeeinheit verfügen, auf der eine Straßenkarte bzw. ein Ausschnitt einer Straßenkarte, welche eine Umgebung des aktuellen Fahrzeugstandortes, sowie eine Markierung für den aktuellen Fahrzeugstandort innerhalb der Karte bzw. des Kartenausschnitts angezeigt wird.

Solche Navigationsgeräte mit Kartendarstellung bieten oftmals die Möglichkeit, verschiedene Maßstäbe der Karte darzustellen. Der jeweilige Maßstab kann dabei entweder manuell beliebig oder mittels einer automatisch vom Navigationsgerät gesteuerten Zoom-Funktion eingestellt werden, wobei mit der Automatik regelmäßig ein Maßstab gewählt wird, in dem sowohl der aktuelle Fahrzeugstandort, als auch das Navigationsziel zusammen auf der Anzeigeeinheit dargestellt sind.

Patent Abstracts of Japan zu JP 06 300 575 offenbart ein Fahrzeugnavigationssystem, bei dem die Entfernung zwischen Fahrzeugstandort und einer nächsten in Fahrtrichtung liegenden Kreuzung berechnet und dementsprechend der Maßstab für eine Kartendarstellung gewählt wird. Ermöglicht der gewählte Maßstab nicht die gleichzeitige Darstellung von aktuellem Standort und Kreuzung wird ein kleinerer Maßstab gewählt, so dass Standort und Kreuzung auf demselben Kartenausschnitt darstellbar sind. Kartenausschnitt und Maßstab der Kartendarstellung werden dabei stets größtmöglich so gewählt, dass der Fahrzeugstandort im Zentrum der Kartendarstellung eingezeichnet ist.

JP-A-7 182 597 beschreibt ein Navigationsgerät, bei dem der Maßstab der Kartendarstellung laufend so angepasst wird, dass die Strecke zwischen dem aktuellen Fahrzeugstandort und dem nächsten Entscheidungspunkt im größtmöglichen Maßstab dargestellt wird.

Vorteile der Erfindung

Das erfindungsgemäße Navigationsgerät und das erfindungsgemäße Verfahren mit den Merkmalen der unabhängigen Patentansprüche ermöglichen demgegenüber, daß der Maßstab des Kartenausschnitts stets so gewählt und während der Fahrt des Kraftfahrzeugs angepaßt wird, daß die zwischen aktuellem Fahrzeugstandort und dem nächsten Entscheidungspunkt, beispielsweise einem Abbiegepunkt, zurückzulegende Wegstrecke vollständig und mit größtmöglicher Auflösung auf der Anzeigeeinheit dargestellt wird.

Die gemäß der Erfindung vorgesehene stufenweise Anpassung des Maßstabs des auf der Anzeigeeinheit dargestellten aktuellen Kartenausschnitts bei Annäherung des Fahrzeugstandorts an den nächsten Entscheidungspunkt hat den Vorteil, daß eine Aktualisierung der Darstellung nicht kontinuierlich erfolgen muß, wodurch in erheblichem Maße Rechenleistung eingespart werden kann. Darüber hinaus ist eine stufenweise Maßstabsumschaltung für den Benutzer weniger verwirrend, da dieser sich nicht auf einer ständig ändernden Karte orientieren muß.

Die Neueinstellung des Maßstabs des auf der Anzeigeeinheit eines erfindungsgemäßen Navigationsgeräts dargestellten Kartenausschnitts, sobald der aktuelle Fahrzeugstandort mit dem Entscheidungspunkt übereinstimmt, ermöglicht eine frühzeitige Orientierung des Benutzers anhand einer Kartendarstellung, deren Maßstab wieder entsprechend der Entfernung zwischen aktuellem Standort und nächstem Entscheidungspunkt eingestellt ist.

Zeichnungen

Ausführungsbeispiele der Erfindung sind in den Zeichnungen dargestellt und werden in der nachfolgenden Beschreibung näher erläutert.

Es zeigen

Figur 1 ein Blockschaltbild des erfindungswesentlichen Teils eines erfindungsgemäßen Navigationsgeräts,

Figur 2A ein Ablaufdiagramm eines ersten Ausführungsbeispiels des erfindungsgemäßen Verfahrens zur Einstellung des Maßstabs der Kartendarstellung,

Figur 2B ein Ablaufdiagramm eines zweiten Ausführungsbeispiels des erfindungsgemäßen Verfahrens,

Figur 3A beispielhaft einen ersten auf der Anzeigeeinheit des erfindungsgemäßen Navigationsgeräts dargestellten Kartenausschnitt,

Figur 3B einen zweiten, und

Figur 3C einen dritten Kartenausschnitt.

Beschreibung der Ausführungsbeispiele

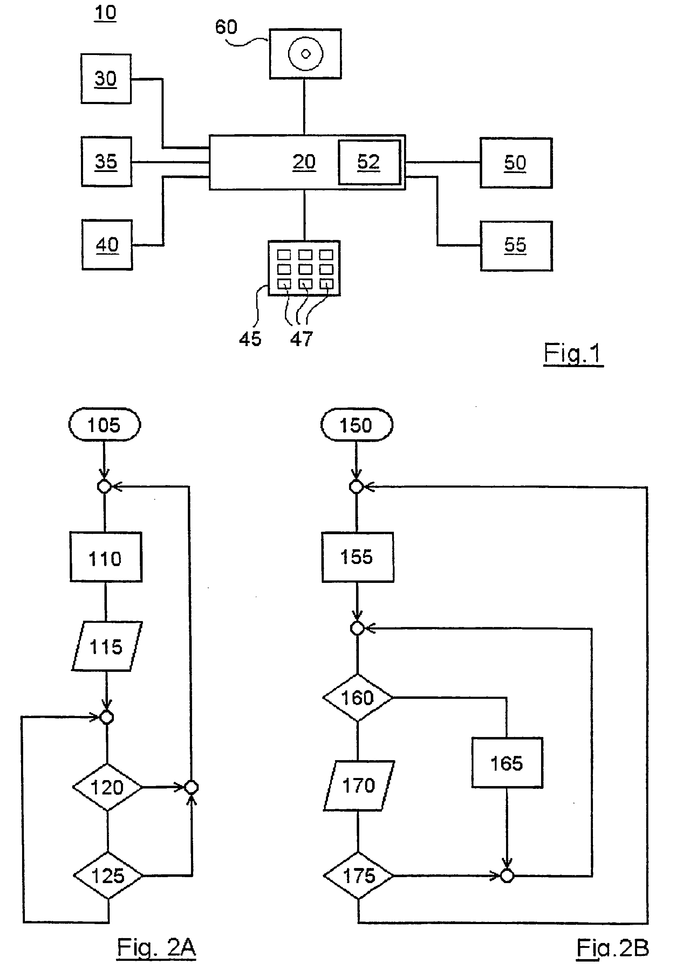

Figur 1 zeigt ein Blockschaltbild eines erfindungsgemäßen Navigationsgeräts zur Durchführung des erfindungsgemäßen Verfahrens.

Eine Gerätesteuerung 20 des erfindungsgemäßen Navigationsgeräts 10, umfaßt sowohl den eigentlichen Navigationsrechner, als auch eine Anzeigesteuerung 52, die unter anderem der Einstellung des Maßstabs eines auf einer Anzeigeeinheit 50 des Navigationsgeräts 10 dargestellten Land- oder Straßenkarte dient.

An die Gerätesteuerung 20 sind Mittel 30, 35, 40 angeschlossen, die Informationen über den Standort, die Bewegungsrichtung und den Bewegungszustand des Fahrzeugs abgeben. Dabei handelt es sich zum Beispiel um einen Drehratensensor 30, mit dessen Hilfe durch Integration über die erfaßten Drehratenänderungen die Orientierung des Fahrzeugs, in dem das Navigationsgerät installiert ist, bezüglich der Himmelsrichtungen erfaßt wird. Alternativ kann zur Bestimmung der Orientierung des Fahrzeugs auch ein Magnetkompaß Verwendung finden. Weiter handelt es sich dabei um einen Wegstreckenmesser 35, der beispielsweise von Radsensoren eines Antiblockiersystems für Fahrzeugbremsen abgegebene Impulse erfaßt und aus der festgestellten Impulszahl und einem bekannten Radumfang eine zurückgelegte Fahrstrecke ermittelt. Schließlich handelt es sich dabei um einen GPS-(Global Positioning System-) Empfänger 40 zum Empfang und zur Auswertung von von GPS-Satelliten ausgestrahlten Funksignalen, anhand derer die Position des Fahrzeugs feststellbar ist. Bei einer alternativen Ausführungsform kann es auch vorgesehen sein, daß die zurückgelegte Fahrstrecke allein aus empfangenen Satellitensignalen bestimmt wird. Ebenso kann es auch vorgesehen sein, daß die Signale des GPS-Empfängers zur Korrektur der aufgrund der Signale der übrigen Sensoren bestimmten Fahrzeugposition herangezogen werden.

Weiterhin ist an die Steuerung 20 ein Speicher 60 angeschlossen, in dem Informationen einer Land- bzw. Straßenkarte in digitaler Form gespeichert sind. Beim vorliegenden Ausführungsbeispiel ist der Speicher 60 in Form eines CD-ROM-Laufwerks mit eingelegter CD-ROM als Datenträger für die Landkarteninformationen realisiert. Ebenso kann es jedoch auch vorgesehen sein, daß der Speicher 60 in Form eines RAM- bzw. ROM-Halbleiterspeichers realisiert ist.

Auf der an die Steuerung 20 angeschlossenen Anzeigeeinheit 50 wird während des eigentlichen Navigationsvorganges, also während der Leitung des Fahrzeugführers entlang einer, beispielsweise vor Fahrtantritt vorherberechneten Fahrstrecke, ein Kartenausschnitt dargestellt, der den aktuellen Fahrzeugstandort und auch den nächsten Entscheidungspunkt, also beispielsweise einen Abbiegepunkt umfaßt. Weiter können auf dieser ergänzend Fahranweisungen für den Fahrzeugführer, beispielsweise in Form eines Richtungspfeiles bei Annäherung an einen Entscheidungspunkt, also beispielsweise bei bevorstehenden Abbiegevorgängen, und einer Restentfernungsanzeige bis zum Abbiegevorgang, dargestellt werden. Alternativ oder ergänzend zur optischen Vermittlung von Fahranweisungen mittels der Anzeigevorrichtung 50 ist eine akustische Ausgabevorrichtung 55 vorgesehen, über die akustische Fahranweisungen, wie z. B. "nach 100 Metern rechts abbiegen", "ab jetzt der Hauptstraße folgen" o. ä., ausgegeben werden.

Außerdem ist an die Steuerung 20 eine Eingabeeinheit 45 mit Bedienelementen, wie Drucktasten 47 oder anderen Eingabemitteln, wie z. B. Drehknöpfen, zur Eingabe eines Navigations-Zielpunktes sowie zur Bedienung weiterer Funktionen des Geräts angeschlossen.

Das erfindungsgemäße Navigationsgerät sowie das erfindungsgemäße Navigationsverfahren funktionieren wie folgt.

Nach Einschalten des Navigationsgeräts 10 liefern die Sensoren 30, 35, 40, nämlich der Drehratensensor 30, der Wegstreckenmesser 35 und der GPS-Empfänger 40 Informationen, aus denen die Steuerung 20 bzw. der in der Steuerung enthaltene Navigationsrechner die aktuelle Position des Fahrzeugs, in das das erfindungsgemäße Navigationsgerät eingebaut ist, ermittelt. Gegebenenfalls berücksichtigt die Steuerung dabei im Sinne einer Plausibilitätsprüfung auch Daten aus der im Speicher 60 abgelegten Straßenkarte zur Korrektur der aufgrund der Sensordaten berechneten Fahrzeugposition. Diese Art der Korrektur der ermittelten Fahrzeugposition ist auch unter dem Begriff "Map Matching" bekannt.

Vor, nach oder auch während der Bestimmung des aktuellen Fahrzeugstandorts erfolgt die Eingabe eines Navigations-Zielorts oder -punkts in an sich bekannter Weise, beispielsweise durch buchstabenweise Eingabe eines Orts- oder Städte- und eines Straßennamens mittels der Eingabeeinheit 45, oder beispielsweise durch Markierung des Zielortes mittels eines mit Cursortasten steuerbaren Zeigers auf einer auf der Anzeigeeinheit 50 dargestellten Land- oder Straßenkarte.

Anschließend berechnet der Navigationsrechner aufgrund des aktuellen Fahrzeugstandortes und der Zielorteingabe des Benutzers unter Zugrundelegung der im Speicher 60 abgelegten Straßenkarteninformationen eine Fahrroute vom aktuellen Stand- zum eingegebenen Zielort.

Während des eigentlichen Zielführungsvorgangs, also während der Fahrt des Kraftfahrzeugs, werden in Abhängigkeit einer jeweils aktuellen Fahrzeugposition bei Annäherung des Fahrzeugstandorts an einen Entscheidungspunkt, beispielsweise an eine Kreuzung, an der gemäß der berechneten Fahrtroute von einer gerade befahrenen Straße abzubiegen ist, Fahranweisungen erzeugt, die optisch über die Anzeigeeinheit 50 oder akustisch mittels der akustischen Ausgabevorrichtung 55 dem Fahrzeugführer zur Kenntnis gebracht werden.

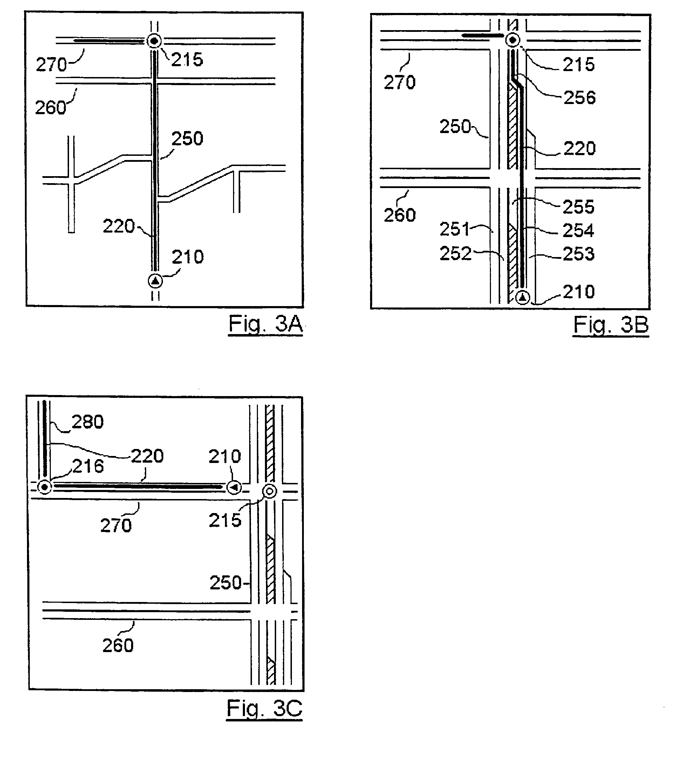

Die Funktionsweise des erfindungsgemäßen Navigationsgeräts und des erfindungsgemäßen Verfahrens werden im folgenden unter Bezugnahme auf die Ablaufpläne der Figuren 2A und 2B sowie die Figuren 3A, 3B und 3C erläutert.

Der Ablauf beginnt mit dem eigentlichen Zielführungsvorgang, also nach Feststellung der aktuellen Fahrzeugposition mittels der Sensoren 30, 35 und 40, Eingabe einer Zielortes und Berechnung einer Fahrtroute vom aktuellen Fahrzeugstandort zum eingegebenen Zielort mit Schritt 105.

Das Fahrzeug befindet sich nun beispielsweise auf einer ersten Straße 250, die gemäß der berechneten Fahrtroute bis zu einer Kreuzung mit einer zweiten Straße 270 zu befahren ist. An der Kreuzung soll gemäß der berechneten Route von der aktuell befahrenen ersten Straße 250 nach links in die zweite Straße 270 abgebogen werden. Der nächste Entscheidungspunkt 215, an dem durch das Navigationsgerät eine Fahranweisung ausgegeben wird, ist somit die genannte Kreuzung 215 der ersten Straße 250 mit der zweiten Straße 270. Kurz vor Erreichen des Entscheidungspunktes 215, wird das Navigationsgerät eine Fahrtanweisung beispielsweise in der Form etwa mit dem Inhalt "an der nächsten Kreuzung links abbiegen" ausgeben.

In Schritt 110 berechnet nun die Anzeigesteuerung 52 des Navigationsgeräts aufgrund der für eine Kartendarstellung vorgegebenen Fläche der Anzeigeeinheit 50 und der Entfernung der aktuellen Fahrzeugposition 210 vom nächsten Entscheidungspunkt 215 einen größtmöglichen Maßstab, mit dem die Karte sowohl mit der aktuellen Fahrzeugposition 210, als auch dem nächsten Entscheidungspunkt 215 auf der Anzeigeeinheit 50 darstellbar ist. Der Maßstab wird dabei als im wesentlichen umgekehrt proportional zur tatsächlichen Entfernung zwischen aktuellem Fahrzeugstandort 210 und nächstem Entscheidungspunkt 215 berechnet, so daß die Strecke zwischen aktueller Fahrzeugposition und nächstem Entscheidungspunkt möglichst formatfüllend auf der Anzeigeeinheit 50 dargestellt wird. Anschließend wird in Schritt 115 die Karte mit dem berechneten Maßstab und der aktuellen Fahrzeugposition 210, wie dem nächsten Entscheidungspunkt 215 auf der Anzeigeeinheit 50 dargestellt. Bei dem aktuellen Kartenmaßstab der Figur 3A sind auf der Karte lediglich die aktuell befahrene Straße 250, zwei sie kreuzende Straßen 260 und 270, darunter die zweite Straße 270, sowie die aktuelle Fahrzeugposition 210 und der Entscheidungspunkt 215 zu erkennen. Nicht zu erkennen sind beim aktuellen Kartenmaßstab einzelne Fahrspuren der Straßen oder wie viele Fahrspuren die Straßen aufweisen.

Der Ablauf wird mit Schritt 120 fortgesetzt. Dort erfolgt eine Prüfung, ob der bisherige nächste Entscheidungspunkt 215 bereits passiert worden ist und ein neuer nächster Entscheidungspunkt vorliegt. Ist dies nicht der Fall, so wird der Ablauf mit Schritt 125 fortgesetzt. Dort erfolgt eine Prüfung, ob seit der letzten Prüfung eine vorgegebene Strecke zurückgelegt worden ist. Ist dies nicht der Fall, so kehrt der Ablauf zu Schritt 120 zurück. Der Kartenmaßstab wird somit vorerst nicht verändert. Somit bleibt, solange der nächste Entscheidungspunkt nicht erreicht und eine vorgegebene Wegstrecke nicht zurückgelegt worden ist, der gerade aktuelle Kartenmaßstab vorerst erhalten. Damit wird dem Fahrzeugführer beim vorliegenden Ausführungsbeispiel eine ständige Neuorientierung auf sich ständig ändernden Karten erspart. Prinzipiell ist es jedoch durchaus denkbar, den Kartenmaßstab der tatsächlichen Entfernung zwischen Fahrzeugstandort und nächstem Entscheidungspunkt ständig anzupassen.

Die vorgegebene Strecke ist vorzugsweise variabel und vom aktuellen Kartenmaßstab abhängig. Weiter kann sie auch von der Straßenklasse, beispielsweise Autobahn, Landstraße oder Innenstadt, oder der Straßendichte im gerade befahrenen Gebiet abhängig sein. Beim Befahren einer Autobahn mit geringer Dichte an Abfahrten, Kreuzen oder Dreiecken kann die vorgegebene Strecke beispielsweise in der Größenordnung von 5 bis 10 Kilometern liegen, im innerstädtischen Bereich beispielsweise in der Größenordnung bis hinab zu 10 Metern.

Wird in Schritt 125 festgestellt, daß eine vorgegebene Strecke zurückgelegt worden ist, so geht der Ablauf zu Schritt 110 über, wo ein neuer Kartenmaßstab berechnet wird. Anschließend erfolgt die Kartendarstellung mit dem neu berechneten Kartenmaßstab und einem Kartenausschnitt, auf dem wiederum sowohl der aktuelle Fahrzeugstandort 210, als auch der nächste Entscheidungspunkt 215 dargestellt sind.

Diese Situation ist in Figur 3B dargestellt. Da sich die aktuelle Fahrzeugposition 210 an den nächsten Entscheidungspunkt 215 angenähert hat, wurde ein kleinerer Kartenmaßstab gewählt. Der nun kleinere Kartenmaßstab ermöglicht die Darstellung weiterer Details, wie der mehreren Fahrspuren 251, 252 der Gegenfahrbahn der ersten Straße 250, der Fahrspuren 253 und 254 der ersten Straße 250 in Fahrtrichtung, einer ersten Linksabbiegespur 255 zum Abbiegen von der ersten Straße 250 in die sie kreuzende dritte Straße 260, einer zweiten Linksabbiegespur 256 zum Abbiegen von der ersten Straße 250 in die sie kreuzende zweite Straße 270, sowie der Tatsache, daß die erste Fahrspur 253 in Fahrtrichtung kurz nach der Kreuzung mit der dritten Straße 260 endet.

Die Darstellung der beschriebenen Details ermöglicht dem Fahrzeugführer eine Orientierung dahingehend, daß er sich zur Weiterfahrt entlang der berechneten Fahrtroute ausgehend vom nun aktuellen Fahrzeugstandort 210 vorzugsweise auf der zweiten Fahrspur 254 in Fahrtrichtung einordnet, da die erste Fahrspur 253 in Fahrtrichtung nach der Kreuzung mit der dritten Straße endet. Weiter wird dem Fahrzeugführer eine Orientierung dahingehend ermöglicht, daß ein Einordnen auf der äußerst linken Fahrspur 255 in Fahrtrichtung nicht zweckmäßig ist, da es sich dabei offensichtlich um eine Linksabbiegespur 255 zum Abbiegen in die dritten Straße handelt. Schließlich kann der Fahrzeugführer der aktuellen Kartendarstellung entnehmen, daß zum Abbiegen in die zweite Straße 270 entlang der berechneten Fahrtroute 220 im weiteren Verlauf der ersten Straße 250 im Anschluß an die Kreuzung der ersten mit der dritten Straße 260 offenbar eine Linksabbiegespur zum Abbiegen in die zweite Straße 270 vorgesehen ist.

Wird in Schritt 120 des Ablaufs festgestellt, daß der nächste auf der Fahrtroute 220 liegende Entscheidungspunkt 215 passiert worden ist, so geht der Ablauf zu Schritt 110 über, wo die Neuberechnung eines Maßstabes zur Darstellung der Karte auf der Anzeigeeinheit 50 in Abhängigkeit der tatsächlichen Entfernung des dann neuen nächsten Entscheidungspunktes 216 und der aktuellen Fahrzeugposition erfolgt. Figur 3C zeigt diese Situation. Das Fahrzeug ist der durch das Navigationsgerät ausgegebenen Fahranweisung folgend in die zweite Straße 270 nach links abgebogen und hat dabei den Entscheidungspunkt 215 passiert. Die nun aktuelle Fahrzeugposition 210 liegt auf der zweiten Straße 270 kurz nach dem passierten Entscheidungspunkt 215. Der neue nächste Entscheidungspunkt 216 markiert eine Einmündung einer vierten Straße 280 von rechts in die zweite Straße 270, in die gemäß der berechneten Fahrtroute abgebogen werden soll.

Figur 2B zeigt einen Ablaufplan eines zweiten Ausführungsbeispiels des erfindungsgemäßen Verfahrens, der nachfolgend erläutert wird.

Der Ablauf beginnt mit dem eigentlichen Zielführungsvorgang, also nach Feststellung der aktuellen Fahrzeugposition mittels der Sensoren 30, 35 und 40, Eingabe einer Zielortes und Berechnung einer Fahrtroute vom aktuellen Fahrzeugstandort zum eingegebenen Zielort mit Schritt 150.

Das Fahrzeug befindet sich beispielsweise wiederum auf der ersten Straße 250, die gemäß der berechneten Fahrtroute bis zu einer Kreuzung mit einer zweiten Straße 270 zu befahren ist. An der Kreuzung soll gemäß der berechneten Route von der aktuell befahrenen ersten Straße 250 nach links in die zweite Straße 270 abgebogen werden. Der nächste Entscheidungspunkt 215, an dem durch das Navigationsgerät eine Fahranweisung ausgegeben wird, ist somit die genannte Kreuzung 215 der ersten Straße 250 mit der zweiten Straße 270. Kurz vor Erreichen des Entscheidungspunktes 215, wird das Navigationsgerät eine Fahrtanweisung beispielsweise in der Form etwa mit dem Inhalt "an der nächsten Kreuzung links abbiegen" ausgeben.

In Schritt 155 wählt nun die Steuerung 20, bzw. die Anzeigesteuerung 52 als Teil der Steuerung 20 des Navigationsgeräts 10, zunächst einen größtmöglichen für die Kartendarstellung vorgesehenen Maßstab, mit dem die Karte sowohl mit der aktuellen Fahrzeugposition 210, als auch dem nächsten Entscheidungspunkt 215 auf der Anzeigeeinheit 50 darstellbar ist. Es erfolgt aber zunächst noch keine Darstellung des gewählten Kartenausschnitts auf der Anzeigevorrichtung 50.

Bei einer anderen Ausführungsform dieses Ausführungsbeispiels kann jedoch auch vorgesehen sein, daß auch schon zu diesem Zeitpunkt, nämlich nach Einstellung eines größtmöglichen Kartenmaßstabs bereits eine Darstellung der Karte auf der Anzeigevorrichtung 50 erfolgt.

In Schritt 160 wird nun aufgrund der vorgegebenen Abmessungen der für eine Kartendarstellung auf der Anzeigeeinheit 50 zur Verfügung stehenden Fläche und des Abstandes der aktuellen Fahrzeugposition 210 zum nächsten Entscheidungspunkt 215 geprüft, ob der Kartenmaßstab unter der Maßgabe, daß sowohl die aktuelle Fahrzeugposition, als auch der nächste Entscheidungspunkt auf dem dann gewählten Kartenausschnitt darstellbar sind, um einen vorgegebenen Faktor verkleinert werden kann. Ist dies der Fall, so wird in Schritt 165 der Kartenmaßstab um den vorgegebenen Faktor verkleinert, beispielsweise halbiert, so daß dann beispielsweise statt eines Maßstabes von 1 : 500.000 ein Maßstab von 1: 250.000 gewählt wird. Weitere für eine Verkleinerung vorgegebene Kartenmaßstäbe sind dann beispielsweise 1 : 100.000, 1 : 50.000, 1 : 25.000, 1 : 10000, 1 : 5.000, 1 : 2500, 1 : 1000. Alternativ ist aber auch eine Verkleinerung um jeweils einen Faktor von beispielsweise ungefähr 4, $\sqrt{2}$ oder auch $\sqrt[4]{2}$ möglich. Anschließend geht der Ablauf zu Schritt 160 über, wo erneut geprüft wird, ob der Kartenmaßstab weiter um den vorgegebenen Faktor verkleinert werden kann. Auf diese Weise wird unter der Maßgabe, daß sowohl der aktuelle Fahrzeugstandort 210, als auch der nächste Entscheidungspunkt 215 entlang der berechneten Fahrtroute 220 auf dem gewählten Kartenausschnitt darstellbar sind, der Kartenmaßstab sukzessive verkleinert.

Wird schließlich in Schritt 160 festgestellt, daß eine weitere Verkleinerung des Kartenmaßstabs bei gleichzeitiger Darstellbarkeit von aktueller Fahrzeugposition 210 und nächstem Entscheidungspunkt 215 auf ein- und demselben Kartenausschnitt nicht möglich ist, erfolgt in Schritt 170 die Darstellung des Kartenausschnitts mit dem bei der vorgegebenen Rasterung zuvor ermittelten kleinstmöglichen Kartenmaßstab auf der Anzeigeeinheit 50 des Navigationsgeräts 10, wie beispielsweise in Figur 3A dargestellt.

Anschließend wird in Schritt 175 überprüft, ob der nächste Entscheidungspunkt 215 zwischenzeitlich passiert worden ist. Ist dies nicht der Fall, so geht der Ablauf erneut zu Schritt 160 über, wo wiederum überprüft wird, ob zwischenzeitlich eines weitere Verkleinerung des Kartenmaßstabs um ein vorgegebenes Maß unter gleichzeitiger Darstellbarkeit der aktuellen Fahrzeugposition 210 wie des nächsten Entscheidungspunktes 215 mit dem verkleinerten Kartenmaßstab auf der Anzeigeeinheit 50 möglich ist. Dies ist beispielsweise dann der Fall, wenn sich das Fahrzeug auf der ersten Straße 250 um eine bestimmte Strecke entlang der berechneten Fahrtroute 220 dem nächsten Entscheidungspunkt 215 genähert hat. Es erfolgt dann in Schritt 165 eine Reduzierung des Kartenmaßstabs um einen vorgegebenen Wert. Ist eine weitere Reduzierung des Kartenmaßstabs zu diesem Zeitpunkt nicht möglich, so erfolgt in Schritt 170 die Darstellung des Kartenausschnitts mit dem reduzierten Kartenmaßstab, wie beispielsweise in Figur 3B dargestellt.

Andernfalls, wenn also eine Verkleinerung des Kartenmaßstabs in Schritt 160 noch nicht möglich war, erfolgt in Schritt 170 weiterhin die Darstellung des Kartenausschnitts mit unverändertem Kartenmaßstab.

Wird in Schritt 175 festgestellt, daß, wie in der Situation der Figur 3B, der nächsten Entscheidungspunkt 215 passiert worden ist, so wird in Schritt 155 zunächst wieder der größtmögliche Kartenmaßstab vorgewählt und dann anschließend sukzessive in der beschriebenen Art und Weise auf das kleinstmögliche, eine gleichzeitige Darstellung von aktueller Fahrzeugposition 210 und dann nächstem Entscheidungspunkt 216 ermöglichende Maß reduziert.

Statt einer schlagartigen Vergrößerung des Kartenmaßstabs auf einen größtmöglichen Wert kann dieser bei einer anderen Ausführungsform des zweiten Ausführungsbeispiels auch um jeweils einen vorgegebenen Wert solange vergrößert werden, bis sowohl aktueller Fahrzeugstandort 210, als auch nächster Entscheidungspunkt 216 in kleinstmöglichem Maßstab auf einem gemeinsamen Kartenausschnitt darstellbar sind.

Während im Zusammenhang mit der Beschreibung der beiden Ausführungsbeispiele stets davon ausgegangen wurde, daß bei der Kartendarstellung mindestens sowohl die aktuelle Fahrzeugposition 210, als auch der nächste Entscheidungspunkt 215 auf der Anzeigeeinheit 50 gleichzeitig darstellbar sein müssen, kann bei einer weiteren Ausführungsform vorgesehen sein, daß zusätzlich auch noch eine vorgegebene Umgebung der aktuellen Fahrzeugposition 210 und/oder des nächsten Entscheidungspunktes 215, beispielsweise ein Umkreis in der Größenordnung von ungefähr 5% bis 10% der gesamten Kartenfläche, darstellbar sein muß. Dies erleichtert dem Fahrzeugführer die Orientierung im aktuell befahrenen Straßennetz, da auch eventuell am Straßenrand oder in der unmittelbaren Umgebung vorhandene markante Punkte auf der Kartendarstellung verzeichnet sind.

Während bisher davon ausgegangen wurde, daß der Kartenmaßstab stets so gewählt wird, daß sowohl aktueller Fahrzeugstandort 210, als auch nächster Entscheidungspunkt 215 gleichzeitig auf der Anzeigeeinheit 50 darstellbar sein müssen, kann bei einer weiteren Ausführungsform von dieser Forderung auch dahingehend abgewichen werden, daß beispielsweise nur der nächste Entscheidungspunkt auf der Kartendarstellung dargestellt sein muß, im übrigen der Kartenmaßstab im wesentlichen umgekehrt proportional zur Entfernung des aktuellen Fahrzeugstandorts vom nächsten Entscheidungspunkt gewählt wird. Ebenso kann grundsätzlich auch die Forderung nach Darstellung des nächsten Entscheidungspunktes auf dem Kartenausschnitt aufgeweicht werden, so daß nur der aktuelle Fahrzeugstandort oder auch weder Fahrzeugstandort, noch nächster Entscheidungspunkt auf dem gewählten Kartenausschnitt dargestellt werden. Der Kartenmaßstab wird dann wiederum im wesentlichen umgekehrt proportional der Entfernung zwischen aktuellem Fahrzeugstandort und nächstem Entscheidungspunkt, gegebenenfalls auch in vorgegebenen Stufen, gewählt.

## Patentansprüche

1. Verfahren zur Steuerung des Maßstabs eines auf einer Anzeigeeinheit (50) eines Navigationsgeräts (10) dargestellten Kartenausschnitts,

bei dem der Maßstab des dargestellten Kartenausschnitts in Abhängigkeit der Entfernung einer aktuellen Fahrzeugposition (210) zu einem nächsten Entscheidungspunkt (215), auf den sich eine aufgrund einer berechneten Fahrroute (220) ausgegebene oder auszugebende Fahranweisung bezieht, eingestellt wird,

wobei der Maßstab des dargestellten Kartenausschnitts derart eingestellt wird, dass sowohl der aktuelle Fahrzeugstandort (210), als auch der nächste Entscheidungspunkt (215) auf der Anzeige dargestellt werden,

wobei die Strecke zwischen aktueller Fahrzeugposition (210) und nächstem Entscheidungspunkt (215) in im Wesentlichen größtmöglichem Maßstab dargestellt wird,

**dadurch gekennzeichnet,**

**dass** der Maßstab des aktuellen Kartenausschnitts bei Annäherung des Fahrzeugstandorts (210) an den nächsten Entscheidungspunkt (215) neu berechnet und eingestellt wird, sobald das Fahrzeug eine vorgegebene Strecke zurückgelegt hat, wobei die vorgegebene Strekke in Abhängigkeit des aktuellen Kartenmaßstabs oder der aktuell befahrenen Straßenklasse oder in Abhängigkeit der Straßendichte im gerade befahrenen Gebiet eingestellt wird.

2. Verfahren nach Anspruch 1, **dadurch gekennzeichnet, dass** der Maßstab des Kartenausschnitts derart eingestellt wird, dass ein vorgegebener Umkreis um den aktuellen Fahrzeugstandort und/oder den nächsten Entscheidungspunkt auf der Anzeige darstellbar ist.

3. Verfahren nach einem der vorhergehenden Ansprüche, **dadurch gekennzeichnet, dass** der Maßstab des dargestellten Kartenausschnitts im Wesentlichen, umgekehrt proportional zur Entfernung zwischen aktuellem Fahrzeugstandort (210) und dem nächsten Entscheidungspunkt (215) eingestellt wird.

4. Verfahren nach einem der vorhergehenden Ansprüche, **dadurch gekennzeichnet, dass** der Maßstab des dargestellten Kartenausschnitts bei Erreichen des Entscheidungspunktes (215) durch den aktuellen Fahrzeugstandort (210) nach dem Verfahren nach einem der Ansprüche 1 bis 4 mit dem dann nächsten Entscheidungspunkt (216) eingestellt wird.

5. Navigationsgerät mit einer Anzeigevorrichtung (50) zur Darstellung eines Kartenausschnitts, und einer Steuerung (20) zur Einstellung des Maßstabs des dargestellten Kartenausschnitts,

wobei die Steuerung (20) den Maßstab des dargestellten Kartenausschnitts in Abhängigkeit der Entfernung einer aktuellen Fahrzeugposition (210) zu einem nächsten Entscheidungspunkt (215), auf den sich eine aufgrund einer berechneten Fahrroute (220) ausgegebene oder auszugebende Fahranweisung bezieht, einstellt,

wobei die Steuerung (20) den Maßstab des dargestellten Kartenausschnitts derart einstellt, dass sowohl der aktuelle Fahrzeugstandort (210), als auch der nächste Entscheidungspunkt (215) auf der Anzeige dargestellt werden und die Strecke zwischen aktueller Fahrzeugposition (210) und nächstem Entscheidungspunkt (215) in im Wesentlichen größtmöglichem Maßstab dargestellt wird,

**dadurch gekennzeichnet,**

**dass** die Steuerung (20) den Maßstab des dargestellten Kartenausschnitts bei Annäherung des Fahrzeugstandorts (210) an den nächsten Entscheidungspunkt neu berechnet und einstellt, sobald das Fahrzeug eine vorgegebene Strecke zurückgelegt hat, wobei die vorgegebene Strecke in Abhängigkeit des aktuellen Kartenmaßstabs oder der aktuell befahrenen Straßenklasse oder in Abhängigkeit der Straßendichte im gerade befahrenen Gebiet eingestellt wird.

**Claims**

1. Method for controlling the scale of a detail from a map which is displayed on a display unit (50) of a navigation device (10), in which the scale of the displayed detail from a map is set as a function of the distance of a current vehicle position (210) from a subsequent decision point (215) to which a driving instruction which is output or is to be output on the basis of a calculated driving route (220) relates, wherein the scale of the displayed detail from a map is set in such a way that both the current vehicle location (210) and the subsequent decision point (215) are displayed on the display, wherein the distance between the current vehicle position (210) and the subsequent decision point (215) is displayed on essentially the largest possible scale, **characterized in that** the scale of the current detail from a map is recalculated and reset when the vehicle location (210) approaches the subsequent decision point (215) as soon as the vehicle has travelled a predefined distance, wherein the predefined distance is set as a function of the current map scale or the class of the road currently being travelled on or as a function of the density of roads in the region which is currently being travelled in.

2. Method according to Claim 1, **characterized in that** the scale of the detail from a map is set in such a way that a predefined area surrounding the current vehicle location and/or the subsequent decision point can be displayed on the display.

3. Method according to one of the preceding claims, **characterized in that** the scale of the displayed detail from a map is set essentially inversely proportionally to the distance between the current vehicle location (210) and the subsequent decision point (215).

4. Method according to one of the preceding claims, **characterized in that** the scale of the displayed detail from a map is set when the current vehicle location (210) reaches the decision point (215) in accordance with the method according to one of Claims 1 to 4 with what is then the subsequent decision point (216).

5. Navigation device having a display device (50) for displaying a detail from a map, and a controller (20) for setting the scale of the displayed detail from a map,

wherein the controller (20) sets the scale of the displayed detail from a map as a function of the distance of a current vehicle position (210) from a subsequent decision point (215) to which a driving instruction which is output or is to be output on the basis of a calculated driving route (220) relates,

wherein the controller (20) sets the scale of the displayed detail from a map in such a way that both the current vehicle location (210) and the subsequent decision point (215) are displayed on the display and the distance between the current vehicle position (210) and the subsequent decision point (215) is displayed in essentially the largest possible scale,

**characterized in that** the controller (20) recalculates and resets the scale of the displayed detail from a map when the vehicle location (210) approaches the subsequent decision point, as soon as the vehicle has travelled a predefined distance, wherein the predefined distance is set as a function of the current map scale or the class of road which is currently being travelled on or as a function of the density of roads in the region which is currently being travelled in.

**Revendications**

1. Procédé de commande de l'échelle d'un extrait de carte représenté sur une unité d'affichage (50) d'un appareil de navigation (10), selon lequel

on règle l'échelle de l'extrait de carte représenté en fonction de l'éloignement de la position actuelle du véhicule (210) jusqu'au point de décision (215) suivant, concerné par une indication de conduite émise ou à émettre en fonction du trajet (220) calculé,

l'échelle de l'extrait de carte représenté étant réglée pour qu'à la fois l'emplacement actuel (210) du véhicule et aussi le point de décision suivant (215) apparaissent sur l'affichage,

le trajet entre la position actuelle (210) du véhicule et le point de décision suivant (215) étant représentés à l'échelle pratiquement la plus grande possible, **caractérisé en ce que**

lorsque l'emplacement actuel du véhicule (210) se rapproche du point de décision suivant (215), on recalcule et on règle de nouveau l'échelle de l'extrait actuel de carte, dès que le véhicule a parcouru un trajet prédéfini, le trajet prédéfini étant réglé en fonction de l'échelle actuelle de la carte ou de la classe de voie de circulation actuellement utilisée ou en fonction de la densité de voies de circulation dans la zone parcourue à l'instant.

2. Procédé selon la revendication 1, **caractérisé en ce qu'**
on règle l'échelle de l'extrait de carte de façon à représenter sur l'affichage, un environnement prédéfini autour de l'emplacement actuel du véhicule et/ou du point de décision suivant.

3. Procédé selon l'une des revendications précédentes, **caractérisé en ce que**
l'échelle de l'extrait de carte représenté est pratiquement inversement proportionnelle à la distance entre l'emplacement actuel du véhicule (210) et le point de décision suivant (215).

4. Procédé selon l'une des revendications précédentes, **caractérisé en ce que**
l'échelle de l'extrait de carte représenté lorsqu'on atteint le point de décision (215) à partir de l'emplacement actuel du véhicule (210), est réglée selon le procédé de l'une des revendications 1 à 4 avec le point de décision suivant (216).

5. Appareil de navigation comportant un dispositif d'affichage (50) pour représenter un extrait de carte et une commande (20) pour régler l'échelle de l'extrait de carte représenté, la commande (20) réglant l'échelle de l'extrait de carte représenté en fonction de l'éloignement de la position actuelle du véhicule (210) et du point de décision suivant (215) concerné par une indication de conduite à émettre ou émise en fonction du trajet calculé (220), la commande (20) réglant l'échelle de l'extrait de carte représenté de façon à représenter à la fois l'emplacement actuel du véhicule (210) et aussi le point de décision (215) suivant sur l'affichage et le trajet entre la position actuelle du véhicule (210) et le point de décision (215) est représenté à l'échelle pratiquement la plus grande possible, **caractérisé en ce que**
la commande (20) recalcule et règle de nouveau l'échelle de l'extrait de carte représenté lorsque l'emplacement du véhicule (210) se rapproche du point de décision suivant, dès que le véhicule a parcouru un trajet prédéfini, ce trajet prédéfini étant réglé en fonction de l'échelle actuelle de la carte ou de la classe de voie de circulation actuellement empruntée ou en fonction de la densité de voies de circulation dans la zone actuellement parcourue.

Fig.1

Fig. 2A

Fig.2B

Fig. 3A

Fig. 3B

Fig. 3C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 06300575 A
- JP 7182597 A